# EUROPÄISCHE PATENTSCHRIFT

(11) **EP 1 300 919 B1**
(45) Veröffentlichungstag und Bekanntmachung des Hinweises auf die Patenterteilung: **15.09.2004**
(21) Anmeldenummer: 02016526.2
(22) Anmeldetag: 24.07.2002
(51) Int. Cl.: H02H 3/087

(54) **Leitungsnetz und Verfahren zum Schutz des Leitungsnetzes gegen einen seriellen Lichtbogen**
Electrical network and method for protecting the network against electrical arcs
Réseau électrique et procédé pour la protéction du réseau contre les arcs électriques

(30) Priorität: 08.10.2001 DE 10149458
(43) Veröffentlichungstag der Anmeldung: 09.04.2003
(73) Patentinhaber: LEONI Bordnetz-Systeme GmbH & Co KG, 90402 Nürnberg (DE)
(72) Erfinder: Schneider, Bernd, 97337 Dettelbach (DE); Neubert, Joachim, 97422 Schweinfurt (DE)
(74) Vertreter: Tergau & Pohl Patentanwälte

(56) Entgegenhaltungen:
- EP-A- 0 961 380
- EP-A- 1 028 511
- DE-A- 19 609 009
- US-A- 6 104 302

## Beschreibung

Die Erfindung betrifft ein Leitungsnetz sowie ein Verfahren zum Schutz eines Leitungsnetzes gegen einen seriellen Lichtbogen, insbesondere zum Schutz eines 42V-Bordnetzes eines Kraftfahrzeuges.

In heutigen Kraftfahrzeug-Bordnetzen beträgt die Bordnetzspannung üblicher weise 14V. Aufgrund dieser geringen Spannung tritt bei einem Leitungsdefekt, also einer Unterbrechung der Leitung, kein serieller Lichtbogen auf, der die beiden Leitungsenden der schadhaften Leitungen überbrückt.

Neue Konzepte sehen vor, die Bordnetzspannung im Kraftfahrzeug auf 42V anzuheben. Da etwa ab einer Betriebsspannung von 16V Lichtbögen auftreten können, besteht in einem solchen 42V-Bordnetz die Gefahr von seriellen Lichtbögen. Unter einem seriellen Lichtbogen wird hierbei das Überbrücken der Leitungsenden einer defekten und/oder unterbrochenen Leitung verstanden. Entsteht ein Lichtbogen, so besteht zudem die Gefahr, dass sich ein stabiler Betriebspunkt des Lichtbogens einstellt und der Lichtbogen daher kontinuierlich weiter brennt. Dadurch ist insgesamt die Brandgefahr bei Auftreten eines Lichtbogens sehr hoch. Aus der DE 100 17 238 A1 ist eine Kurzschlusslichtbogendetektion für ein Flugzeug bekannt. Hierbei wird mit Hilfe einer aufwändigen Auswerteschaltung anhand eines charakteristischen Rauschens der Kurzschlusslichtbogen detektiert.

Aus der DE 196 09 009 A1 sowie der EP 1 028 511 A2 sind Leitungsnetze bekannt, bei denen zur Erhöhung der Ausfallsicherheit Verbraucher über parallele Leitungsstränge des Leitungsnetzes versorgt werden.

Der Erfindung liegt die Aufgabe zugrunde, ein Leitungsnetz, insbesondere ein 42V-Bordnetz eines Kraftfahrzeuges, sicher gegenüber von Lichtbögen zu schützen.

Die Aufgabe wird gemäß der Erfindung gelöst durch ein Leitungsnetz nach Patentanspruch 1. Bei dem Leitungsnetz ist eine Last einerseits mit einer Spannungsquelle, insbesondere eine Gleichspannungsquelle, über eine Versorgungsleitung und andererseits mit Masse verbunden. Zum Schutz des Leitungsnetzes vor einem seriellen Lichtbogen ist die Versorgungsleitung durch zwei parallele Leitungsstränge gebildet. Die beiden Leitungsstränge sind jeweils über eine Sicherung abgesichert. Diese sind dabei derart ausgebildet, dass bei einer Schädigung des einen Leitungsstrangs die Sicherung des zweiten Leitungsstrangs aufgrund eines erhöhten Stroms anspricht, so dass auch dieser unterbrochen wird.

Dieser Ausgestaltung liegt die Idee zugrunde, zwei parallele Strompfade vorzusehen, so dass bei Auftreten eines Leitungsdefekts in einem der durch die Leitungsstränge gebildeten Strompfade dieser schadhafte Strompfad quasi durch den weiteren Strompfad kurzgeschlossen ist. Die Schädigung des einen Leitungsstrangs wird beispielsweise durch einen Kabelbruch oder auch durch eine Kontaktschwäche hervorgerufen. An dieser Stelle besteht zunächst die Gefahr des Entstehens eines Lichtbogens in Abhängigkeit der Randbedingungen, wie beispielsweise der Abstand der Leitungsenden an der schadhaften Stelle oder die verwendeten Materialien. Durch die Anordnung des zweiten Leitungsstrangs ist sichergestellt, dass der erste Leitungsstrang, sobald er beschädigt ist, stromlos wird, da aufgrund der schadhaften Stelle der Widerstand im schadhaften Leitungsstrang deutlich höher ist als im unbeschädigten parallelen Leitungsstrang. Daher ist ausgeschlossen, dass an der schadhaften Stelle des ersten Leitungsstrangs ein serieller Lichtbogen entstehen kann. Durch die Sicherungen erfolgt zusätzlich zu der Vermeidung des Entstehens eines Lichtbogens im schadhaften Leitungsstrang eine sicherungsbedingte Trennung auch des unbeschädigten zweiten Leitungsstrangs. Durch das Erkennen des schadhaften Leitungsstrangs wird die Möglichkeit geschaffen, die beschädigte Versorgungsleitung durch eine unbeschädigte zu ersetzen, um die Gefahr eines Lichtbogens bei einer Schädigung des zweiten Leitungsstranges auszuschließen. Um das Leitungsnetz sicher zu schützen, ist die Versorgungsleitung über ihre gesamte Länge, in der prinzipiell ein Lichtbogen entstehen kann, durch die parallelen Leitungsstränge gebildet.

In einer zweckdienlichen Ausgestaltung sind die beiden in die Leitungsstränge geschalteten Sicherungen zusammen für den maximalen Laststrom ausgelegt, d. h. die einzelne Sicherung ist für einen Strom unterhalb des maximalen Laststroms ausgelegt und die durch die beiden Sicherungen abgesicherten Ströme ergeben in Summe den maximalen Laststrom. Mit dieser Ausgestaltung wird erreicht, dass bei einer Schädigung des einen Leitungsstranges die Sicherung des zweiten Leitungsstranges anspricht, da ja über den zweiten Leitungsstrang nunmehr der gesamte Laststrom fließt. Zweckdienlicherweise wird im normalen Betriebsfall eine Gleichverteilung der über die Leitungsstränge fließenden Ströme eingestellt und die beiden Sicherungen sind jeweils für den halben maximalen Laststrom ausgebildet. Die beiden Leitungsstränge mit den darin angeordneten Sicherungen sind daher vorzugsweise identisch ausgebildet, was herstellungstechnisch einfach zu realisieren ist.

In einer vorteilhaften Ausgestaltung sind die Sicherungen als elektronische Bauelemente ausgebildet, beispielsweise als Halbleiter-Schaltelemente. Im Vergleich zu herkömmlichen Schmelzsicherungen haben diese elektronischen Bauelemente ein besseres Ansprechverhalten, so dass eine Schädigung sicherer und insbesondere schneller erkannt wird.

Vorzugsweise sind die Bauelemente dabei für eine Nullstromerkennung und/oder Überstromerkennung ausgebildet. Unter Überstromerkennung wird hierbei verstanden, dass die Bauelemente eine unzulässige Stromerhöhung (Überstrom) erkennen, die beispielsweise im zweiten Leitungsstrang auftritt, wenn der erste Leitungsstrang schadhaft ist. Unter Nullstromerkennung wird verstanden, dass das Bauelement erkennt, wenn kein Strom mehr über den jeweiligen Leitungsstrang, beispielsweise bei einer Schädigung des ersten Leitungsstrangs, fließt. Insbesondere in Kombination dieser beiden Eigenschaften ist ein besonders sicheres Leitungsnetz gebildet, da das Bauelement in dem unbeschädigten Leitungsstrang aufgrund des Überstroms anspricht und/oder das Bauelement im schadhaften Leitungsstrang aufgrund des nicht mehr vorhandenen Stromflusses anspricht. Dadurch werden beide Leitungsstränge zuverlässig durch die Sicherungen getrennt.

In einer bevorzugten Ausbildung stehen die Bauelemente derart miteinander in Verbindung, dass bei Ansprechen des einen Bauelements auch das weitere Bauelement betätigt wird, dass also auch das weitere Bauelement schaltet, so dass die beiden Leitungsstränge unterbrochen sind. Hierdurch ist eine zusätzliche Sicherungsmaßnahme erreicht, die gewährleistet, dass selbst bei Ansprechen nur eines Bauelements beide Leitungsstränge zuverlässig unterbrochen werden.

Insbesondere ist durch diese Maßnahme ein sicherer Schutz des Leitungsnetzes in dem Fall gewährleistet, in dem beide Leitungsstränge gleichzeitig schadhaft sind. Selbst wenn an beiden schadhaften Stellen die Randbedingungen derart sind, dass prinzipiell ein Lichtbogen entstehen kann, so wird nur in dem Leitungsstrang der Lichtbogen stabil brennen, in dem die Randbedingungen besonderes günstig sind. Gleichzeitig würde ein eventuell ursprünglich vorhandener Lichtbogen in dem anderen Leitungsstrang erlöschen. Es liegt also auch hier die Situation vor, dass in einem Leitungsstrang kein Strom mehr fließt. Anders als bei einem unbeschädigten Leitungsstrang muss jedoch über den brennenden Lichtbogen nicht zwangsläufig ein Strom fließen, der von dem zugeordneten Bauelement als Überstrom erkannt wird. In diesem Fall würde also das Sicherungselement in der schadhaften Leitung mit dem brennenden Lichtbogen nicht auslösen. Erst durch die zwangsweise Abschaltung aufgrund der Nullstromerkennung in dem ersten Bauelement wird der im zweiten Leitungsstrang brennenden Lichtbogen durch Abschalten des zweiten Leitungsstrangs sicher gelöscht.

Insbesondere in diesem Fall, in dem der Strom nicht mehr über einen schadfreien Leitungsstrang fließen kann, ist eine möglichst schnelle Abschaltung des Stroms erforderlich, die durch herkömmliche Schmelzsicherung aufgrund deren trägen Anspruchsverhaltens nicht erreicht wird. In der bevorzugten Ausführungsvariante mit den als elektronischen Bauelementen ausgebildeten Sicherungen, die miteinander in Verbindung stehen, wird das Leitungsnetz daher sicher geschützt. Denn entweder wird das Auftreten eines Lichtbogens verhindert oder - wenn beide Leitungen schadhaft sind - wird zumindest ein evtl. brennender Lichtbogen zuverlässig und schnell gelöscht. Zudem ist eine Fehlerdiagnose möglich.

Im Hinblick auf eine möglichst kostengünstige Herstellung sind die Leitungsquerschnitte der beiden Leitungsstränge zweckdienlicherweise in Summe für den maximalen Laststrom ausgelegt. Der einzelne Leitungsstrang weist also einen im Vergleich zu einem für den maximalen Laststrom ausgelegten Leitungsquerschnitts reduzierten Leitungsquerschnitt auf. Vorzugsweise haben die beiden Leitungsstränge den gleichen Leitungsquerschnitt und sind insbesondere jeweils für den halben maximalen Laststrom ausgelegt, um durch eine identische Ausbildung der beiden Leitungsstränge eine einfache Herstellung zu ermöglichen. Durch diese Maßnahme wird insgesamt im Vergleich zu der Ausgestaltung mit einer Ein-Strang-Versorgungsleitung kein oder nur ein geringfügig erhöhter Materialbedarf für die Versorgungsleitung benötigt. Insbesondere im Hinblick auf den Einsatz von sogenannten Folienleitungen, bei der beispielsweise Kupferbahnen auf einem folienartigen Träger auflaminiert sind, führt die Ausgestaltung mit den beiden parallelen Leitungssträngen zu keinen oder nur geringfügigen Mehrkosten.

Sofern die Last über eine Masseleitung und nicht unmittelbar mit der Masse kontaktiert ist, sind vorzugsweise die beschriebenen Sicherungsmaßnahmen gegen einen Lichtbogen auch für die Masseleitung vorgesehen. Im einfachsten Fall wird dies erreicht durch eine parallele Anordnung von zwei Massesträngen, die die Masseleitung zwischen der Last zur Masse bilden. Dabei ist zweckdienlicherweise jeder der Massestränge für den maximalen Laststrom ausgebildet. Vorteilhafterweise sind zusätzlich in den beiden Massesträngen Sicherungen vorgesehen, um einen sicheren Schutz zu erzielen. Bei der Verwendung von Sicherungen haben die Massestränge aus Kostengründen bevorzugt jeweils geringere Leitungsquerschnitte als für den maximalen Laststrom nötig wären. Prinzipiell werden für die Masseleitung bevorzugt die gleichen Maßnahmen wie für die Versorgungsleitung ergriffen.

Die Aufgabe des Schutzes des Leitungsnetzes wird weiterhin erfindungsgemäß gelöst durch das Verfahren gemäß Anspruch 9.

Weitere bevorzugte Ausgestaltungen des Verfahrens sind den Unteransprüchen zu entnehmen. Zudem sind die im Hinblick auf das Leitungsnetz angeführten Vorteile und bevorzugten Ausführungen sinngemäß auch auf das Verfahren zu übertragen.

Ausführungsbeispiele der Erfindung werden im Folgenden anhand der Zeichnung näher erläutert. Es zeigen jeweils in schematischen und stark vereinfachten Blockbilddarstellungen
- Fig.1: eine ausschnittsweise Darstellung eines Versorgungsnetzes mit zwei eine Versorgungsleitung bildende Leitungsstränge, in denen jeweils eine herkömmliche Schmelzsicherung angeordnet ist und
- Fig.2: eine ausschnittsweise Darstellung des Versorgungsnetzes nach Fig.1, bei dem anstelle der Schmelzsicherungen elektronische Halbleiter-Schaltelemente eingesetzt sind und zusätzlich zwei eine Masseleitung bildende Massestränge mit integrierten Sicherungen vorgesehen sind.

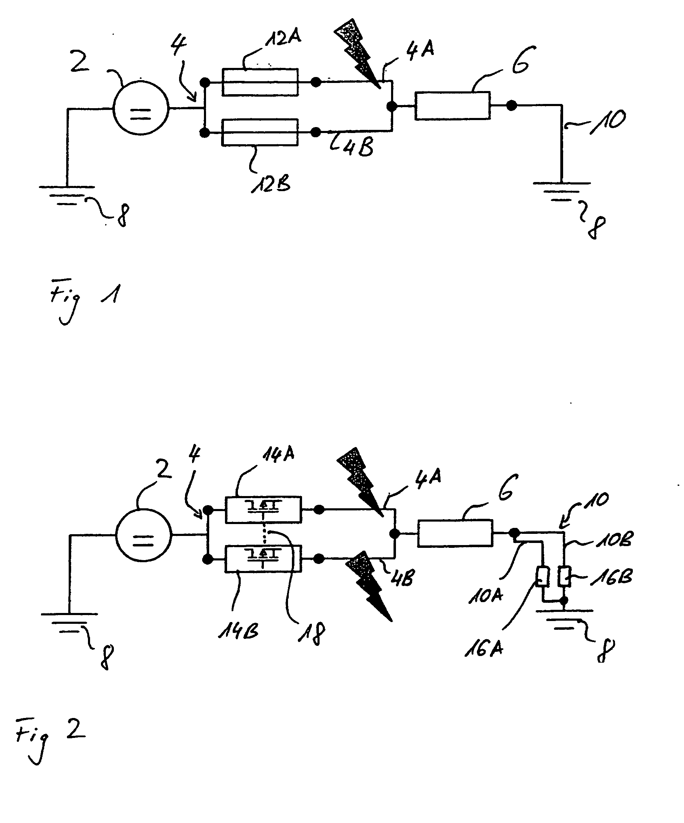

Die beiden in den Figuren dargestellten Leitungsnetze sind jeweils insbesondere 42V-Bordnetze für ein Kraftfahrzeug. Sie weisen jeweils eine Gleichspannungsquelle 2, eine Versorgungsleitung 4 mit einem ersten und einem zweiten Leitungsstrang 4A, 4B auf, über die die Gleichsplannungsquelle 2 mit einer Last 6 verbunden ist. Die Last 6 wiederum ist mit der Masse 8 über eine Masseleitung 10 verbunden. Im Ausführungsbeispiel der Fig. 2 ist die Masseleitung 10 gebildet durch zwei Massestränge 10A, 10B. In die beiden Leitungsstränge 4A, 4B ist jeweils eine Sicherung geschaltet. Im Ausführungsbeispiel der Fig. 1 sind dies herkömmliche Schmelzsicherungen 12A, B und im Ausführungsbeispiel der Fig. 2 sind dies elektronische Bauelemente in Form von Halbleiter-Schaltelementen 14A, B. Weiterhin ist in den beiden Massensträngen 10A, 10B jeweils eine Sicherung 16A, 16B vorgesehen.

In den Figuren sind weiterhin durch Blitzsymbole an einigen Stellen Leitungsdefekte, die in Form von Leitungsunterbrechungen auftreten können, angedeutet. In Abhängigkeit der Randbedingungen, wie beispielsweise Abstand der Leitungsenden zueinander sowie der verwendeten Materialien, besteht bei einem 42V-Bordnetz die Gefahr, dass ein serieller Lichtbogen entsteht und bei günstigen Randbedingungen stabil brennt. Ein stabil brennender Lichtbogen stellt eine sehr hohe Brandgefahr dar und ist daher auf alle Fälle zu vermeiden. Bisher bestand in den üblicherweise eingesetzten 14V-Bordnetzen im Kraftfahrzeug aufgrund der niedrigen Spannung keine Gefahr für die Entstehung eines Lichtbogens.

Weist nun der erste Leitungsstrang 4A (Fig.1) einen Leitungsdefekt in Form einer Leitungsunterbrechung auf, so wirkt der zweite Leitungsstrang 4B als Kurzschlussleitung und überbrückt den ersten Leitungsstrang 4A. Der gesamte Strom fließt daher über den zweiten Leitungsstrang 4B. Der erste Leitungsstrang 4A ist nun stromlos und an der Leitungsunterbrechung wird die Entstehung eines Lichtbogens von vornherein vermieden.

Die Schmelzsicherungen 12A, 12B sind insbesondere jeweils für den halben maximalen Laststrom ausgelegt, so dass die Schmelzsicherung 12B anspricht, wenn der gesamte Strom über den zweiten Leitungsstrang 4B fließt. Das Ansprechen der Schmelzsicherung 12B ist daher als ein Indiz für eine Leitungsunterbrechung im Leitungsstrang 4A zu werten, so dass der schadhafte Leitungsstrang 4A ersetzt werden kann. Durch die geeignete Auswahl der Schmelzsicherungen 12A, B ist also eine Fehlerdiagnose möglich.

Im Vergleich zu herkömmlichen Schmelzsicherungen lässt sich mit der Verwendung der Halbleiter-Schaltelemente 14A, B gemäß Fig. 2 ein besonders sicherer Schutz des Leitungsnetzes erreichen. Insbesondere sind die Halbleiter-Schaltelemente14A, B hierzu sowohl für eine Nullstromerkennung als auch eine Überstromerkennung ausgebildet. Im Falle nur eines schadhaften Leitungsstrangs 4A, wie es in Fig. 1 dargestellt ist, unterbricht daher sowohl das Halbleiter-Schaltelement 14A den Leitungsstrang 4A, da kein Strom mehr über diesen Leitungsstrang fließt. Gleichzeitig unterbricht das Halbleiter-Schaltelement 14B den Leitungsstrang 4B, da über diesen Leitungsstrang der gesamte Strom fließt. Da die Halbleiter-Schaltelemente 14A, B ebenfalls vorzugsweise auf den halben maximalen Laststrom abgestimmt sind, wird nämlich von dem zweiten Halbleiter-Schaltelement 14B ein Überstrom detektiert, was zur Abschaltung des zweiten Leitungsstrangs 4B führt.

Für einen besonders sicheren Schutz des Leitungsnetzes sind die beiden Halbleiter-Schaltelemente 14A, B miteinander verbunden, wie durch die punktiert dargestellte Verbindung 18 angedeutet ist. Die beiden Halbleiter-Schaltelemente 14A, B sind über diese Verbindung 18 dabei derart ausgebildet, dass das Schalten des einen Schaltelements 14A zwangsweise auch zum Schalten des anderen Schaltelements 14B führt. Beide Leitungsstränge 4A, 4B werden also zwangsweise und sicher abgeschaltet, sobald von einem Halbleiter-Schaltelement 14A, B ein Fehlerfall, also entweder ein Überstrom oder ein Nullstrom detektiert wird. Dies ist insbesondere dann von besonderem Vorteil, wenn- wie in Fig. 2 angedeutet - in beiden Leitungssträngen 4a, 4B eine Leitungsunterbrechung auftritt. In diesem Fall würde - geeignete Randbedingungen vorausgesetzt - nur in einem Leitungsstrang, beispielsweise im Leitungsstrang 4A, ein Lichtbogen stabil brennen. Das Halbleiter-Schaltelement 14A würde jedoch nicht zwangsweise einen Überstrom erkennen, so dass der Lichtbogen unter Umständen stabil brennen könnte. Dies ist jedoch aufgrund der zwangsweisen Abschaltung vermieden, die dadurch hervorgerufen wird, dass das zweite Schaltelement 14B den im zweiten Leitungsstrang 4B auftretenden Nullstrom erfasst und daher schaltet.

Sofern die Last 6 über die Masseleitung 10 nicht unmittelbar mit der Masse 8, beispielsweise durch unmittelbares Anschrauben an einem Blechbauteil, kontaktiert ist, so wird die Masseleitung 10 gemäß Fig. 2 durch vergleichbare Maßnahmen geschützt, wie auch die Versorgungsleitung 4. Dieser Schutz beinhaltet, dass die Masseleitung 10 durch zwei parallel geführte Massestränge 10A, B gebildet ist, in denen jeweils eine Sicherung 16A, B angeordnet ist, die als Schmelzsicherungen oder auch als Halbleiter-Schaltelemente ausgebildet sein können.

Um einen sicheren Schutz des gesamten Versorgungsnetzes zu gewährleisten sind vorzugsweise alle Leitungsverbindungen, bei denen die Gefahr des Auftretens eines Lichtbogens bestehen, durch parallel geführte Stränge gebildet. Dies bedeutet, dass beispielsweise die Versorgungsleitung 4 über ihre gesamte Länge oder zumindest im Wesentlichen über ihre gesamte Länge zwischen der Gleichstromquelle 2 und der Last 6 durch die beiden Leitungsstränge 4A, B gebildet ist. Im Hinblick auf eine möglichst kostengünstige Ausführung wird für die Versorgungsleitung 4 eine Folienleitung mit zumindest zwei Leiterbahnen verwendet, die die beiden Leitungsstränge 4A, 4B darstellen. Gleiches gilt natürlich für alle Leitungen im gesamten Versorgungsnetz, d. h. vorzugsweise ist das Versorgungsnetz mit den parallel geführten Strängen durch Folienleitungen mit einer Mehrzahl von Leitungsbahnen gebildet.

## Patentansprüche

1. Leitungsnetz, insbesondere 42V-Bordnetz eines Kraftfahrzeugs, mit einer Last (6), die einerseits mit einer Spannungsquelle (2) über eine Versorgungsleitung (4) und andererseits mit Masse (8) verbunden ist, wobei die Versorgungsleitung (4) zum Schutz des Leitungsnetzes vor einem seriellen Lichtbogen durch zwei parallele Leitungsstränge (4A, 4B) gebildet ist, in denen jeweils eine Sicherung (12A, B; 14A, B) geschaltet ist, **dadurch gekennzeichnet dass** die Sicherungen (12A, B; 14A, B) derart ausgebildet sind, dass bei einer Schädigung des einen Leitunsstrangs (4A) die Sicherung im anderen Leitungsstrang (4B), aufgrund eines erhöhten Stroms anspricht.

2. Leitungsnetz nach Anspruch 1, bei dem die beiden Sicherungen (12A, B; 14A, B) zusammen für den maximalen Laststrom ausgelegt sind.

3. Leitungsnetz nach einem der vorhergehenden Ansprüche, bei dem die Sicherungen als elektronische Bauelemente (14A, B) ausgebildet sind.

4. Leitungsnetz nach Anspruch 3, bei dem die Bauelemente (14A, B) für eine Nullstromerkennung und/oder Überstromerkennung ausgebildet sind.

5. Leitungsnetz nach Anspruch 3 oder 4, bei dem die Bauelemente (14A, B) derart miteinander in Verbindung stehen, dass bei Ansprechen des einen Bauelements (14A) auch das weitere Bauelement (14B) betätigt wird, so dass die beiden Leitungsstränge (4A, B) unterbrochen sind.

6. Leitungsnetz nach einem der vorhergehenden Ansprüche, bei dem die Leitungsquerschnitte der beiden Leitungsstränge (4A, B) in Summe für den maximalen Laststrom ausgelegt sind.

7. Leitungsnetz nach einem der vorhergehenden Ansprüche, bei dem die Last (6) mit der Masse (8) über eine Masseleitung (10) verbunden ist, die durch zumindest zwei Massestränge (10A, B) gebildet ist, welche jeweils einen für den maximalen Laststrom ausgelegten Leitungsquerschnitt aufweisen.

8. Leitungsnetz nach einem der vorhergehenden Ansprüche, bei dem die Last (6) mit der Masse (8) über eine Masseleitung (10) verbunden ist, die durch zwei Massestränge (10A, B) gebildet ist, in denen jeweils eine Sicherung (16A, B) geschaltet ist.

9. Verfahren zum Schutz eines Leitungsnetzes, insbesondere eines 42V-Bordnetzes eines Kraftfahrzeugs, gegen einen seriellen Lichtbogen, bei dem im fehlerfreien Fall eine Last (6) über zwei parallele Leitungsstränge (4A, 4B), in denen jeweils eine Sicherung (12A,B; 14A,B) vorgesehen ist, mit Strom versorgt wird, und bei dem bei Auftreten eines Leitungsdefekts in einem der Leitungsstränge (4A) der Strom vollständig über den anderen Leitungsstrang (4B) fließt und dann die Sicherung (12B;14B) dieses anderen Leitungsstrangs (4B) die Stromversorgung der Last (16) unterbricht.

10. Verfahren nach Anspruch 9, bei dem die Sicherungen als elektronische Bauelemente (14A, B) ausgebildet sind, wobei bei Ansprechen des einen Bauelements (14A) zwangsweise auch das weitere Bauelement (14B) betätigt wird, und beide Leitungsstränge (4A, 4B) unterbrochen werden.

## Claims

1. Cable network, in particular a 42 V vehicle network for a motor vehicle, having a load (6) which is connected on one side to a voltage source (2) via a supply line (4) and on the other side to earth (8), with the supply line (4) being formed by two parallel cable runs (4A, 4B) for protection of the cable network against a serial arc, and in each of which cable runs (4A, 4B) a fuse (12A, B; 14A, B) is connected, **characterized in that** the fuses (12A, B; 14A, B) are formed in such a way that if one cable runs (4A) is damaged, the fuse in the other cable run (4B) responds on account of an increased current.

2. Cable network according to Claim 1, in which the two fuses (12A, B; 14A, B) are designed for the maximum load current.

3. Cable network according to one of the preceding claims, in which the fuses are in the form of electronic components (14A, B).

4. Cable network according to Claim 3, in which the components (14A, B) are designed for zero-current identification and/or overcurrent identification.

5. Cable network according to Claim 3 or 4, in which the components (14A, B) are connected to one another in such a way that, when one component (14A) responds, the other component (14B) is also operated, so that both cable runs (4A, B) are interrupted.

6. Cable network according to one of the preceding claims, in which the cable cross sections of the individual cable runs (4A, B) are designed overall for the maximum load current.

7. Cable network according to one of the preceding claims, in which the load (6) is connected to earth (8) via an earthing cable (10), which is formed by at least two earthing runs (10A, B), each of which has a cable cross section designed for the maximum load current.

8. Cable network according to one of the preceding claims, in which the load (6) is connected to earth (8) via an earthing cable (10), which is formed by two earthing runs (10A, B) in each of which a fuse (16A, B) is connected.

9. Method for protection of a cable network, in particular of a 42 V vehicle network in a motor vehicle, against a serial arc, in which method, in the event of a fault, a load (6) is supplied with power via two parallel cable runs (4A, 4B) in each of which a fuse (12A, B; 14A, B) is provided, and in which, if a cable defect occurs in one of the cable runs (4A), all of the current flows via the other cable run (4B), and the fuse (12B; 14B) in this other cable run (4B) then interrupts the power supply to the load (16).

10. Method according to Claim 9, in which the fuses are in the form of electronic components (14A, B) in which, if one of the components (14A) responds, the other component (14B) is also necessarily operated, and both cable runs (4A, 4B) are interrupted.

## Revendications

1. Réseau électrique, en particulier un réseau embarqué de 42 V d'un véhicule, avec une charge (6), qui est reliée d'une part à une source de tension (2) par l'intermédiaire d'une ligne auxiliaire (4) et d'autre part à la masse (8), dans lequel la ligne auxiliaire (4) en vue de la protection du réseau électrique contre des arcs électriques est formée de deux tronçons de ligne (4A, 4B), auxquels un dispositif de sécurité (12A, B ; 14A, B) est respectivement connecté, **caractérisé en ce que** les dispositifs de sécurité (12A, B ; 14A, B) sont formés de telle sorte que, en cas de détérioration de l'un des tronçons de ligne (4A), le dispositif de sécurité se déclenche dans l'autre tronçon de ligne (4B) en raison d'un courant élevé.

2. Réseau électrique selon la revendication 1, dans lequel les deux dispositifs de sécurité (12A, B ; 14A, B) sont prévus ensemble pour le courant de charge maximum.

3. Réseau électrique selon l'une des revendications précédentes, dans lequel les dispositifs de sécurité sont réalisés en tant que composants électroniques (14A, B).

4. Réseau électrique selon la revendication 3, dans lequel les composants (14A, B) sont réalisés pour une reconnaissance de courant nul et/ou une reconnaissance de surintensité de courant.

5. Réseau électrique selon la revendication 3 ou 4, dans lequel les composants (14A, B) sont réunis l'un à l'autre de sorte que, lors du déclenchement d'un des composants (14A), l'autre composant (14B) est également actionné, de sorte que les deux tronçons de ligne (4A, B) sont interrompus.

6. Réseau électrique selon l'une des revendications précédentes, dans lequel les sections de conduction des deux tronçons de ligne (4A, B) sont prévues en addition pour le courant de charge maximal.

7. Réseau électrique selon l'une des revendications précédentes, dans lequel la charge (6) est reliée à la masse (8) par l'intermédiaire d'une ligne de terre (10), qui est formée par au moins deux tronçons de masse (10A, B), qui présentent respectivement une section de conduction prévue pour le courant de charge maximal.

8. Réseau électrique selon l'une des revendications précédentes, dans lequel la charge (6) est reliée à la masse (8) par l'intermédiaire d'une ligne de terre (10), qui est formée par deux tronçons de masse (10A, B), auxquels un dispositif de sécurité (16A, B) est respectivement connecté.

9. Procédé en vue de la protection d'un réseau électrique, en particulier un réseau embarqué de 42 V d'un véhicule, contre les arcs électriques, dans lequel, dans un cas idéal, une charge (6) est alimentée en courant par l'intermédiaire de deux tronçons de ligne parallèles (4A, 4B), dans lesquels un dispositif de sécurité (12A, B ; 14A, B) est prévu respectivement, et dans lequel, lors de l'apparition d'un défaut de ligne dans l'un des tronçons de ligne (4A), le courant circule intégralement dans l'autre tronçon de ligne (4B) et ensuite le dispositif de sécurité (12B ; 14B) de cet autre tronçon de ligne (4B) interrompt l'alimentation en courant de la charge (16).

10. Procédé selon la revendication 9, dans lequel les dispositifs de sécurité sont réalisés en tant que composants électroniques (14A, B), dans lequel, lors du déclenchement d'un des composants (14A), l'autre composant (14B) est également actionné par force, et les deux tronçons de ligne (4A, 4B) sont interrompus.
